# EUROPÄISCHE PATENTANMELDUNG

(11) **EP 2 453 380 A1**
(43) Veröffentlichungstag der Anmeldung: **16.05.2012**
(21) Anmeldenummer: 10191185.7
(22) Anmeldetag: 15.11.2010
(51) Int. Cl.: G06F 21/20

(54) **Vorrichtung und Verfahren zum Ausschliessen missbräuchlicher Eingaben von Bewertungen und zur Bearbeitung und Weiterleitung von Daten**

(71) Anmelder: Düllberg, Axel, 88079 Kressbronn (DE)
(72) Erfinder: Düllberg, Axel, 88079 Kressbronn (DE)
(74) Vertreter: Engelhardt & Engelhardt

(57) **Zusammenfassung**

Die Erfindung bezieht sich auf eine Vorrichtung (1) zur Bearbeitung und Weiterleitung von Daten, die visualisiert und in elektrische Signale umgewandelt sind, mit einem Client, und mit einem externen Server (8), der über eine Datenverbindung (7) mit dem Client zusammenschaltbar ist und auf dem mindestens ein Softwareprogramm gespeichert ist, durch das die Daten für ein vorgegebenes Objekt über den Client aufrufbar und ergänzbar sind, soll die Erfassung von Bewertungen über Objekte eindeutig einem bestimmten Benutzer zugeordnet werden können, um missbräuchliche Eingaben von Bewertungen auszuschließen.
Dies wird dadurch erreicht, dass dem Client ein Identifizierungsmittel (11) zugeordnet ist, durch das individuelle Erkennungsmerkmal eines Benutzers der Vorrichtung (1) bei der Eingabe und/oder Versendung der Daten an den Server (8) feststellbar sind, dass die eingegebenen Daten und die Erkennungsmerkmale des Benutzers an den Server (8) weitergeleitet sind und dass der Server (8) mit einer Auswerteeinrichtung (9) zusammengeschaltet ist, durch die die von dem Client generierten Erkennungsmerkmale bezüglich der Identität des Benutzers mit hinterlegten ldentifizie rungsdaten des jeweiligen Benutzers und/oder mit statistischen Erhebungsdaten vergleichbar sind.

## Beschreibung

Die Erfindung bezieht sich auf eine Vorrichtung nach dem Oberbegriff des Patentanspruches 1 und auf ein Verfahren nach dem Oberbegriff des Patentanspruches 10 zur Bearbeitung und Weiterleitung von Daten.

Im Zeitalter des Internets und den Zugangsportalen zu Internet oder Datennetzwerk geeigneten Bewertungsprogrammen hat sich insbesondere im Tourismusbereich eine neue Form der Bewertung von Urlaubsorten, Hotels, Charterbooten und dergleichen herausgebildet. Verschiedene Agenturen haben zur Bewertung solcher Objekte ein Bewertungsprogramm ausgearbeitet, durch das beispielsweise die Örtlichkeiten, die Sauberkeit oder sonstige Vor- und Nachteile des Objektes über das Internetportal eingegeben und ausgewertet sind. Folglich kann sich ein Interessent einer bestimmten Urlaubsregion oder eines bestimmten Hotels vorab über das Internet darüber unterrichten, welche Bewertungsprofile das jeweilige Objekt durch andere vorherige Urlauber erhalten hat.

Als nachteilig hat sich jedoch herausgestellt, dass solche Bewertungsprogramme oftmals missbraucht werden. Dies kann beispielsweise dadurch geschehen, dass das eigene Hotel besonders oft und sehr günstig bewertet wird. Die Agenturen, die solche Bewertungsprogramme vorbereiten, verwalten und durch das Internet zur Verfügung stellen, haben keine Möglichkeit zu überprüfen, wer welche Informationen zu welchem Zeitpunkt an welchem Ort tatsächlich über das Internet eingegeben hat.

Darüber hinaus können konkurrierende Objekte durch entsprechende Negativ-Bewertungen diskreditiert werden.

Auch ist es für bestimmte Agenturen von großem wirtschaftlichen Interesse zu wissen, wie das jeweilige Mietobjekt bei den entsprechenden Urlaubern aktuell bewertet wird, um dieses in entsprechenden Preiskategorien eingruppieren zu können. Darüber hinaus bieten solche Bewertungsprogramme für Reiseagenturen die Möglichkeit, auf entsprechende Missstände hinzuweisen und Nachbesserungen zu verlangen, wenn ein bestimmter Grenzwert von Negativ-Bewertungen überschritten ist. Voraussetzung für solche sachgerechte Überarbeitungs- und Nachbesserungswünsche ist jedoch, dass transparent nachvollzogen werden kann, dass die Bewertungsprogramme von Dritten nicht missbraucht wurden und die tatsächlich erfassten Datenmengen den tatsächlich abgegebenen Bewertungen der Urlauber entsprechen.

Bislang ist es nicht bekannt, die verwendeten Bewertungsprogramme mittels technischer Maßnahmen derart zu schützen, dass tatsächlich ausgeschlossen werden kann, dass diese zur unlauteren Werbeaussagen des eigenen Objektes missbraucht bzw. konkurrierende Objekte diskreditiert werden.

Es ist daher Aufgabe der Erfindung, eine Vorrichtung und ein Verfahren der eingangs genannten Gattungen weiterzubilden, mittels denen die Erfassung von Bewertungen über Objekte eindeutig einem bestimmten Benutzer zugeordnet werden kann, um missbräuchliche Eingaben von Bewertungen auszuschließen.

Diese Aufgabe ist erfindungsgemäß hinsichtlich der Vorrichtung durch die Merkmale des Patentanspruches 1 und hinsichtlich des Verfahrens durch die Merkmale des Patentanspruches 10 gelöst.

Weitere vorteilhafte Weiterbildungen der Erfindung ergeben sich aus den Unteransprüchen.

Dadurch, dass der Vorrichtung ein Identifizierungsmittel zugeordnet ist, das vorteilhafterweise mit dem Mikroprozessor elektrisch verbunden ist, kann der Benutzer dazu aufgefordert werden, individuelle Erkennungsmerkmale zu erstellen, die anschließend in elektrische Erkennungssignale umgewandelt sind und die durch den Mikroprozessor an das Bewertungsprogramm angekoppelt sind. Die abgegebenen Bewertungen des Benutzers werden daher mit dessen Person verknüpft und gemeinsam an den Server über eine Datenverbindung, beispielsweise das Internet oder ein sonstiges Datennetzwerk, weitergeleitet. Dem Server ist dann eine Auswerteeinrichtung angeschlossen, durch die nicht nur das Bewertungsprogramm in der bisherigen bekannten Weise ausgewertet wird, sondern gleichzeitig wird auch die Identität des Benutzers, der die Bewertung abgegeben hat, verifiziert.

Dies kann beispielsweise besonders vorteilhaft dadurch erreicht sein, dass der Benutzer eine Stimmprobe abgibt, die dann durch die Auswerteeinrichtung und ein Sprachsoftwareprogramm mit hinterlegten Daten des registrierten Benutzers verglichen ist. Allerdings ist es auch möglich, dass die abgegebenen Stimmproben in Datenspeichem abgelegt sind, so dass verifiziert werden kann, ob ein und derselbe Benutzer mehrere solcher Stimmproben abgegeben hat, also dass der gleiche Benutzer mehrere Bewertungen vorgenommen hat.

Solche Identifizierungsmerkmale können auch mittels Scannern oder Kameras erzeugt werden, bei denen der Benutzer einen oder mehrere Finger oder Handfiächenabdrücke bzw. sein Gesicht ablichtet, die dann in elektrische Erkennungssignale umgewandelt sind und in gleicher Weise durch die Auswerteeinheit mit den hinterlegten Daten des jeweiligen Benutzers oder mit den statistischen Daten verglichen werden können.

Weitere vorteilhafte Möglichkeiten, um die Identität des Benutzers zu verifizieren, besteht darin, dass der Ort, an dem die Vorrichtung benutzt wird, mit der geografischen Position des zu bewertenden Objektes verglichen ist. Zu diesem Zweck ist dem Mikroprozessor ein Satelliten gestütztes Ortungssystem zugeordnet, so dass während der Benutzung der Vorrichtung feststellbar ist, an welchem geographischen Ort die Vorrichtung tatsächlich verwendet wurde und ob diese dann mit der Position des Objektes übereinstimmt.

Besonders aufschlussreich ist die Erfassung der Bearbeitungszeiten, denn die Dauer, die der jeweilige Benutzer für die Abgabe seiner Bewertung bezogen auf die Einzelfragen benötigt, liefert ohne weiteres Rückschlüsse, ob der Benutzer das erste Mal oder bereits mehrfach mit dem Bewertungsprogramm konfrontiert wurde. Auch dies liefert Aufschlüsse darüber, ob der Benutzer tatsächlich berechtigt ist, seine Bewertungen abzugeben. Wenn nämlich der Benutzer regelmäßig in missbräuchlicher Absicht das Bewertungsprogramm verwendet, kennt dieser die einzelnen Fragen, so dass diese rascher beantwortet werden können als wenn der Benutzer die Fragen zum ersten oder zweiten Mal beantwortet.

Zusätzlich zu den vorstehend erläuterten Maßnahmen zur Verifizierung der Identität des jeweiligen Benutzers kann auch das Objekt selbst mit unterschiedlichen Erkennungsmerkmalen versehen sein, die in Abhängigkeit von der Zeit durch den Mikroprozessor und/oder den Server zufallsartig generiert sind. Bei solchen Identifizierungsmerkmalen kann es sich um Zahlen- und/oder Buchstabenkombinationen handeln, die der Benutzer beim Absenden des Bewertungsprogrammes an dieses anzuheften hat. Durch die Auswerteeinrichtung kann dann überprüft werden, ob zum Zeitpunkt der Versendung des Bewertungsprogrammes dieser Identifizierungscode des Objektes korrekt ist, um festzustellen, dass der registrierte Benutzer zumindest am Ort des Objektes gewesen ist. Es ist auch denkbar, dass der Benutzer die Identifizierungsmerkmale des Objektes einmalig als SMS oder email auf seine hinterlegte Kontaktadresse erhält und diese Identifizierungsdaten dann zusammen mit den Bewertungsprofilen in dem Bewertungsprogramm einzugeben hat.

In der Zeichnung ist eine erfindungsgemäße Vorrichtung sowie deren Aufbau und Funktionsweise dargestellt, die nachfolgend näher erläutert ist. Im Einzelnen zeigt:
- Figur 1: eine Vorrichtung zur Bearbeitung und Weiterleitung von Daten mit einem Mikroprozessor, einem Monitor und einer Tastatur, wobei der Mikroprozessor über eine Datenaustauschleitung oder einem Daten-Netzwerk mit einem Server und einer Auswertungseinrichtung verbunden ist und
- Figur 2: die Vorrichtung gemäß Figur 1 und deren Funktionsweise in schemati scher Form.

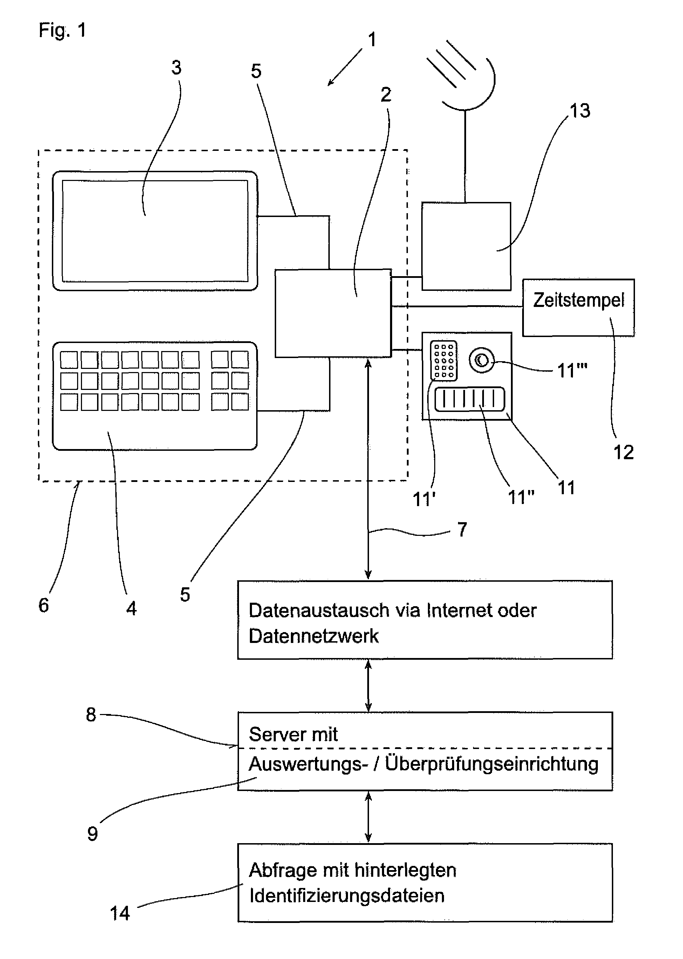

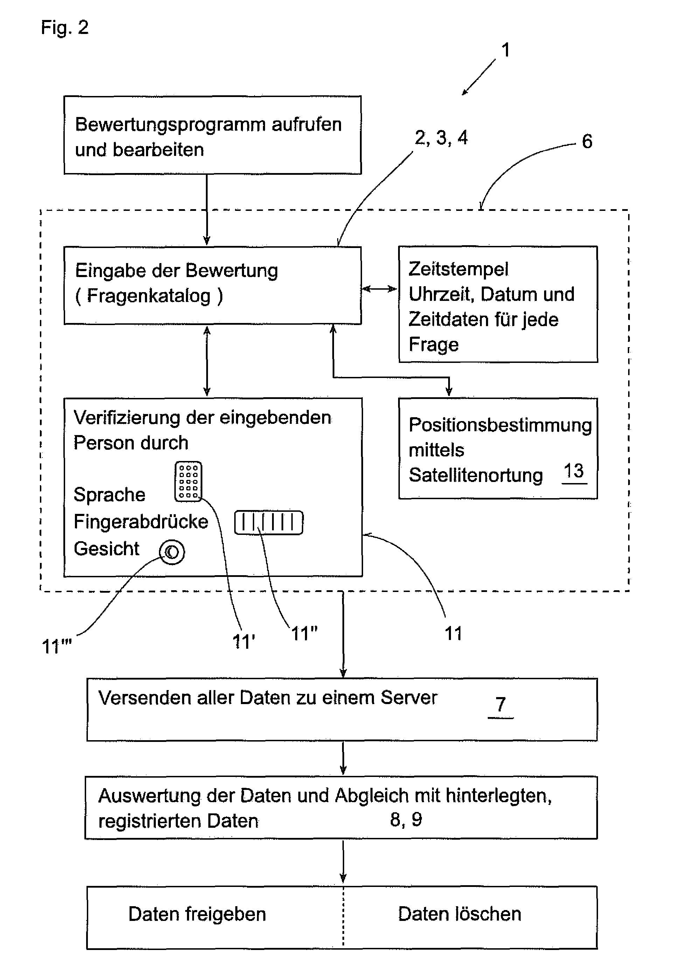

Die in den Figuren 1 und 2 abgebildete Vorrichtung ist mit der Bezugsziffer 1 versehen und dient dazu, computergestützte Programme, insbesondere Bewertungsprogramme für Objekte, zu bearbeiten. Solche Bewertungsprogramme werden beispielsweise in Internet-Portalen oder in sonstigen Datennetzwerken durch Reiseagenturen zur Verfügung gestellt, so dass Benutzer die Möglichkeit haben, die Bewertungen von anderen das Objekt bereits kennenden Benutzern überprüfen zu können. Solche Bewertungsprogramme sind im Wesentlichen dazu geeignet, vor der Buchung eines Hotels, eines Urlaubsortes oder eines sonstiges Miet-Objektes herauszufinden, mit welcher Erfahrung die vorherigen Benutzer das Objekt bewerten.

Die Vorrichtung 1 besteht dabei aus einem Mikroprozessor 2, einem Monitor 3 und einer Tastatur 4, die über elektrische Leitungen 5 oder über Funksignale zusammengeschaltet sind. Hierbei handelt es sich beispielsweise um einen Computer, ein Laptop oder um ein Smartphone. Die Zusammenschaltung zu einem Gerät ist in der Figur 1 schematisch durch die Bezugsziffer 6 gekennzeichnet.

Über eine Datenverbindung 7 ist der Mikroprozessor 2 mit einem externen Server 8 elektrisch verbunden, so dass zwischen dem Mikroprozessor 2 und dem Server 8 nachfolgend näher erläuterte Daten ausgetauscht werden können.

Die Reiseagentur oder der Betreiber von Bewertungsprogrammen hat ausschließlich Zugriff auf die eingehenden Bewertungsprofile.

Zunächst kann über die Tastatur 4 und dem Mirkoprozessor 2 der Server 8 aktiviert und ein auf dem Server 8 gespeichertes Softwareprogramm aufgerufen werden, durch das beispielsweise die Bewertung eines Hotels, eines Restaurants oder dgl. möglich ist. Anhand von einzelnen Fragen, die Bestandteil des Bewertungsprogrammes sind, kann der Benutzer seine persönlichen Eindrücke hinsichtlich des Objektes im Hinblick auf Zufriedenheit, Sauberkeit, Qualität des Personals und dgl. abgeben. Sobald der Benutzer die einzelnen Fragen beantwortet hat, schickt üblicherweise der Mikroprozessor 2 das ergänzte Bewertungsprogramm an den Server 8 zurück, das dann durch Intemet-Portale und dgl. der Allgemeinheit frei zugänglich ist.

Erfindungsgemäß soll nunmehr durch die Vorrichtung 1 eine Verifizierung der Identität des Benutzers vor, während und/oder nach der Überarbeitung des Bewertungsprogrammes erfolgen. Zu diesem Zweck ist der Mikroprozessor 2 mit einem Identifizierungsmittel 11 verbunden.

Das Identifizierungsmittel 11 ist beispielsweise als Lautsprecher 11, als Scanner 11" und/oder als Kamera 11'" ausgestaltet.

Durch den Lautsprecher 11' können Schwingungen der Stimme des Benutzers in elektrische Signale umgewandelt werden, die als Identifizierungsignale dem Bewertungsprogramm durch den Mikroprozessor 2 angekoppelt sind, so dass an den Server 8 gemeinsam die Daten des Bewertungsprogrammes und die Identifizierungssignale des Benutzers weitergeleitet werden.

An den Server 8 ist eine Auswerteeinrichtung 9 angeschlossen, die beispielsweise mit einer Datenbank verbunden ist. Die entsprechenden Benutzer können ihre Stimmsignale auf der Datenbank hinterlegen, so dass durch die Auswerteeinrichtung 9 die aufgezeichneten Erkennungssignale des Benutzers mit den hinterlegten Identifizierungssignalen vergleichbar ist, so dass eindeutig verifizierbar ist, dass der Benutzer, der registriert ist, auch die Bewertungen für das Objekt abgegeben hat.

Darüber hinaus können die Stimmsignale des jeweiligen Benutzers mit Hilfe eines Softwareprogrammes derart ausgewertet werden, dass feststellbar ist, ob der Benutzer mehrfach solche Bewertungsprogramme aufgerufen und abgegeben hat. Mit Hilfe der Auswerteeinrichtung 9 ist es daher möglich, zu überprüfen, ob ein und derselbe Benutzer mehrfach das Bewertungsprogramm verwendet hat. Sollte der Benutzer daher mehrere Bewertungen abgegeben haben, sind diese gegebenenfalls als nicht korrekt zu löschen, so dass diese in die allgemeine Bewertungskriterien nicht einfließen.

Wenn das Identifizierungsmittel 11 als Scanner 11" ausgestaltet ist, können ein oder mehrere Fingerabdrücke oder Handflächenabdrücke des Benutzers abgelichtet werden. Die Linien der Fingerabdrücke sind erfassbar und in elektrische Signale umwandelbar, so dass auch hierbei individuelle Erkennungsmerkmale des Benutzers generiert sind, die mit Hilfe der Auswerteeinrichtung 9 und den hinterlegten Identifizierungsmerkmalen des Benutzers verglichen werden können. Darüber hinaus kann die Häufigkeit der derart erstellten Finger- oder Handflächenabdrücke statistisch erfasst werden, um Aufschlüsse darüber zu erhalten, ob der Benutzer mehrfach das Bewertungsprogramm verwendet hat.

Sollte das Identifizierungsmittel 11 als Kamera 11'" ausgestaltet sein, können von dem Benutzer individuelle Fotographien beispielsweise der Front- oder Seitenansicht des jeweiligen Gesichtes erstellt werden. Die derart gefertigten Fotographien können in elektrische Erkennungssignale umgewandelt und durch die Auswerteeinrichtung 9 mit den hinterlegten Erkennungsmerkmalen des Benutzers verglichen werden, um die Identität des Benutzers zu verifizieren.

Um die korrekte Bearbeitung des Bewertungsprogrammes zusätzlich zu kontrollieren, ist der Mikroprozessor 2 mit einem Satelliten gestützten Ortungssystem 13 verbunden. Folglich kann die geographische Position des Mikroprozessors 2 und damit des Benutzers zum Zeitpunkt der Bearbeitung des Bewertungsprogrammes festgestellt und gespeichert werden. Diese Positionsbestimmung des Mikroprozessors 2 erfolgt vorzugsweise selbsttätig und zu jedem beliebigen Zeitpunkt, so dass überprüfbar ist, zu welchem Zeitpunkt der Benutzer bzw. der Mikroprozessor 2 an dem geographischen Ort des Objektes gewesen ist bzw. ob der Ort des Objektes überhaupt in Augenschein genommen wurde.

Auch die Anwesenheit ist demnach feststellbar und dient somit als Kriterium für die Ernsthaftigkeit der Bewertung. Die Bewertung des Objektes kann folglich zu einem späteren Zeitpunkt an einem anderen geographischen Ort erfolgen.

Wenn daher der Benutzer in einem zu bewertenden Objekt sich befindet oder dort war, ist über die geographische Position des Mikroprozessors 2 durch die Auswerteeinrichtung 9 feststellbar, ob der Benutzer an der tatsächlichen geographischen Position des Objektes die Eingabe vorgenommen hat oder nicht. Solche Abfragemöglichkeiten schließen den Missbrauch der Vorrichtung 1 weitgehend aus, denn die Überprüfung der geographischen Position des Objektes und der Vergleich mit der Position des Benutzers zum Zeitpunkt der Bearbeitung des Bewertungsprogrammes führt dazu, verifizieren zu können, ob der Benutzer auch tatsächlich am Ort des Objektes gewesen ist.

Ferner ist es möglich, dass dem Mikroprozessor 2 ein Zeitstempel 12 elektrisch zugeordnet ist. Durch den Zeitstempel 12 kann der Beginn und das Ende des Aufrufes des Bewertungsprogrammes in Form von Datum und Uhrzeit erfasst sein. Darüber hinaus kann auch die Zeitdauer, die der Benutzer benötigt, um das Bewertungsprogramm bzw. die einzelnen Fragen des Bewertungsprogrammes zu bearbeiten, gemessen werden. Die Zeitmessdaten werden durch den Mikroprozessor 2 an den Server 8 und die Auswerteeinrichtung 9 weitergeleitet und insbesondere von der Auswerteeinrichtung 9 derart überprüft, dass festgestellt wird, zu welchem Zeitpunkt und in welcher Zeitdauer der Benutzer das Bewertungsprogramm aufgerufen und bearbeitet hat. Durch solche Zeitmessdaten lässt sich berechnen und damit kontrollieren, ob der Benutzer bereits mehrfach das jeweilige Bewertungsprogramm bearbeitet hat. Je kürzer nämlich die Bearbeitungszeiten der Einzelfragen ausfallen, desto größer ist die Wahrscheinlichkeit, dass der Benutzer bereits mehrfach mit dem Bewertungsprogramm konfrontiert gewesen ist.

Aufgrund der zeitlichen Messdaten sind für jeden Benutzer zudem Bewegungsprofile erstellbar, die mit den zeitlichen Buchungsdaten abgleichbar sind, um den Missbrauch der abgegebenen Bewertungen zu verhindern.

Zusätzlich zu den erläuterten Ausgestaltungen und Funktionsweisen des Identifizierungsmittels 11 kann auch das Objekt selbst mit Identifizierungsmerkmalen versehen werden, die beispielsweise durch den Mikroprozessor 2 oder den Server 8 zufallsartig generiert werden. Solche Objekt-Erkennungsmerkmale liegen in Form von Buchstaben und/oder Zahlenkombinationen vor und können beispielsweise in dem Objekt in Abhängigkeit von der Tageszeit in Schaufenstern oder dgl. für eine bestimmte Zeitperiode aufleuchten. Der Benutzer hat dann bei der Bearbeitung des Bewertungsprogrammes dieses Identifizierungs-Erkennungsmerkmal des Objektes aufzunehmen und die Auswerteeinrichtung 9 kann anschließend überprüfen, ob der Benutzer zum Zeitpunkt der Bewertung tatsächlich bei dem zu bewertenden Objekt gewesen ist.

Es versteht sich, dass die einzeln angesprochenen Identifizierungsmittel 11 fakultativ gemeinsam oder getrennt voneinander eingesetzt werden können. Je mehr solcher Identifizierungsmittel 11 vorgesehen sind, desto größer ist die Wahrscheinlichkeit, dass das Bewertungsprogramm korrekt verwendet wurde.

## Patentansprüche

1. Vorrichtung (1) zur Bearbeitung und Weiterleitung von Daten, die visualisiert und in elektrische Signale umgewandelt sind, mit einem Mikroprozessor (2), einem Monitor (3) und einer Tastatur (4), die derart elektrisch miteinander verbunden sind, dass durch diese die Daten untereinander ausgetauscht sind, und mit einem externen Server (8), der über eine Datenverbindung (7) mit dem Mikroprozessor (2) zusammenschaltbar ist und auf dem mindestens ein Softwareprogramm gespeichert ist, durch das die Daten für ein vorgegebenes Objekt über den Mikroprozessor (2), den Monitor (3) und die Tastatur (4) aufrufbar und ergänzbar sind,
**dadurch gekennzeichnet,**
**dass** dem Mikroprozessor (2) ein Identifizierungsmittel (11) zugeordnet ist, durch das individuelle Erkennungsmerkmal eines Benutzers der Vorrichtung (1) bei der Eingabe und/oder Versendung der Daten an den Server (8) feststellbar sind, dass durch den Mikroprozessor (2) die über die Tastatur (4) eingegebenen Daten und die Erkennungsmerkmale des Benutzers an den Server (8) weitergeleitet sind und dass der Server (8) mit einer Auswerteeinrichtung (9) zusammengeschaltet ist, durch die die von dem Mikroprozessor (2) generierten Erkennungsmerkmale bezüglich der Identität des Benutzers mit hinterlegten Identifzierungsdaten des jeweiligen Benutzers und/oder mit statistischen Erhebungsdaten vergleichbar sind.

2. Vorrichtung nach Anspruch 1,
**dadurch gekennzeichnet,**
**dass** das Identifizierungsmittel (11) aus einem Lautsprecher (11'), einem Scanner (11 ") und/oder aus einer Kamera (11"') gebildet ist, durch und die die persönlichen Erkennungsmerkmale des Benutzers vor, während und/oder nach der Eingabe der Daten feststellbar sind.

3. Vorrichtung nach Anspruch 2,
**dadurch gekennzeichnet,**
**dass** der Lautsprecher (11') die Stimme des Benutzers in elektrische Schwingungen umwandelt, die auf dem Mikroprozessor (2) aufgezeichnet sind, dass diese zusammen mit den eingegebenen Bewertungsdaten gekoppelt sind und an den Server (8) durch den Mikroprozessor (2) weitergeleitet sind, und dass durch die Auswerteeinrichtung (9) des Servers (8) die erhaltenen Stimmsignale elektronisch derart ausgewertet und mit den hinterlegten Erkennungsmerkmale mittels eines Stimmenerkennungsprogrammes verglichen sind, dass diese mit den hinterlegten Stimmdaten des registrierten Benutzers übereinstimmen, und/oder dass die Stimmsignale auf einem Datenspeicher (14) gespeichert sind, die mit den eingehenden Stimmsignalen durch die Auswerteeinrichtung (9) verglichen sind.

4. Vorrichtung nach Anspruch 2,
**dadurch gekennzeichnet,**
**dass** durch den Scanner (11") vorzugsweise Fingerabdrücke oder Handflächen-abdrücke erzeugbar sind, die als elektrische Erkennungsmerkmale auf dem Mikroprozessor (2) gespeichert sind und die durch den Mikroprozessor (2) an die eingegebenen Bewertungsdaten gekoppelt sind und dass die eingescannten Erkennungsmerkmale des jeweiligen Benutzers mit den hinterlegten Identifzierungsmerkmalen des jeweiligen Benutzers durch die Auswerteeinrichtung (9) miteinander verglichen sind, oder dass die Erkennungsmerkmale in einen Datenspeicher (14) eingestellt sind, der durch die Auswerteeinrichtung (9) abfragbar ist.

5. Vorrichtung nach Anspruch 2,
**dadurch gekennzeichnet,**
**dass** durch die Kamera (11"') ein oder mehrere Fotografien des Benutzers angefertigt sind, dass die Fotografien in elektrische Erkennungsmerkmale des jeweiligen Benutzers umgewandelt sind, die durch den Mikroprozessor (2) an die manuell eingegebenen Bewertungsdaten angekoppelt sind und dass durch die Auswerteeinrichtung (9) des Servers (8) die Erkennungsmerkmale der Fotografien mit den hinterlegten Identifizierungsmerkmalen des Benutzers und/oder mit gespeicherten Erkennungsmerkmalen auf einem Datenspeicher (14) verglichen sind.

6. Vorrichtung nach einem der vorgenannten Ansprüche,
**dadurch gekennzeichnet,**
**dass** die Vorrichtung (1) ein Ortungssystem (13), vorzugsweise ein Satelliten gestütztes Ortungssystem, aufweist, durch das die geographische Position der Vorrichtung (1) feststellbar ist und dass durch den Mikroprozessor (2) die Ortungsdaten an die manuell eingegebenen Bewertungsdaten und/oder die Erkennungsmerkmale angekoppelt sind.

7. Vorrichtung nach Anspruch 6,
**dadurch gekennzeichnet,**
**dass** durch die Auswerteeinrichtung (9) die Ortungsdaten mit der tatsächlichen Position des Objektes vergleichbar sind und dass durch die Auswerteeinrichtung (9) feststellbar ist, dass die Position des Eingabeortes zeitweise vor und/oder nach der Bewertung des Objektes mit dem geographischen Ort des Objektes übereinstimmt.

8. Vorrichtung nach einem der vorgenannten Ansprüche,
**dadurch gekennzeichnet,**
**dass** durch den Mikroprozessor (2) die Uhrzeit der manuell eingegebenen Bewertungsdaten und/oder der Erstellungszeitpunkt der Erkennungsmerkmale erfassbar, speicherbar und an die Auswerteeinrichtung (9) des Servers (8) weiterleitbar sind und dass durch die Auswerteeinrichtung (9) verglichen ist, dass der Zeitpunkt der Benutzung der Vorrichtung (1) mit dem Zeitpunkt der Erstellung der Erkennungsmerkmale und dem Ort an dem die Vorrichtung (1) verwendet ist, übereinstimmen.

9. Vorrichtung nach Anspruch 8,
**dadurch gekennzeichnet,**
**dass** der Beginn und das Ende des Bearbeitungszeitpunktes durch den Mikroprozessor (2) erfasst ist und dass durch die Auswerteeinrichtung (9) feststellbar ist, in welcher Zeitspanne die einzelnen Fragen des Bewertungsprogrammes beantwortet sind.

10. Verfahren zur Anfertigung eines Bewertungsprofiles für ein Objekt von einer Vielzahl von Benutzern, mit einem über ein Datennetzwerk (7) abrufbarem Bewertungsprogramm, das durch den jeweiligen Benutzer zu vervollständigen ist,
**gekennzeichnet durch** die folgenden Verfahrensschritte:
- Erstellen von mindestens einem Erkennungsmerkmal des Benutzers, **durch** ein an einem Mikroprozessor (2) angeschlossenes Identifizierungsmittel (11),
- Umwandeln des oder der Erkennungsmerkmale in elektrisch auswertbare Signale,
- Ankoppeln der Signale an das Bewertungsprogramm **durch** den Mikroprozessor (2),
- Weiterleiten der Signale und des Bewertungsprogrammes über die Datenverbindung (7) an eine Auswerteeinrichtung (9),
- Vergleichen der erhaltenen Signale **durch** die Auswerteeinrichtung (9) mit hinterlegten Erkennungsmerkmalen des Benutzers und/oder
- Auswerten der Signale **durch** die Auswerteeinrichtung (9) in Abhängigkeit von deren Häufigkeit und/oder
- Vergleichen der Signale mit in einem Datenspeicher (14) abgelegten Signalen von vorherigen Benutzern.

11. Verfahren nach Anspruch 10,
**dadurch gekennzeichnet,**
**dass** der Zeitpunkt des Aufrufes des Bewertungsprogrammes und/oder die Bearbeitungsdauer jeder einzelnen Frage des Bewertungsprogrammes, vorzugsweise durch den Mikroprozessor (2), gemessen ist, und dass die ermittelten Zeitdaten, insbesondere Datum, Uhrzeit und Dauer der Beantwortung, an die Auswerteeinrichtung (9) zusammen mit den Bewertungsdaten und den Erkennungsmerkmalen des Benutzers weitergeleitet sind und dass durch die Auswerteeinrichtung (9) die benötigten Zeiten zur Beantwortung der Bewertungsdaten mit statistischen Erhebungsdaten zur Verifizierung der korrekten Eingabe der Bewertungsdaten vergleichbar sind.

12. Verfahren nach Anspruch 10 oder 11,
**dadurch gekennzeichnet,**
**dass** die geographische Position des Mikroprozessors (2) vor, während und/oder nach dem Aufrufen des Bewertungsprogrammes, vorzugsweise mittels eines Satelliten gestützten Ortungssystem (13), feststellbar ist, dass die geographischen Ortungsdaten des Mikroprozessors (2) an die Auswerteeinrichtung (9) zusammen mit den Bewertungsdaten und den Erkennungsmerkmalen des Benutzers weitergeleitet sind und dass durch die Auswerteeinrichtung (9) feststellbar ist, ob die Ortungsdaten des Benutzers mit den Positionsdaten des zu bewertenden Objektes übereinstimmen.

13. Verfahren nach Anspruch 10, 11 oder 12,
**dadurch gekennzeichnet,**
**dass** die Erkennungsmerkmale des jeweiligen Benutzers mittels Stimmanalysen, Fingerabdrücken, Handflächenabdrücken oder Fotografien der Gesichtspartien in Frontal- oder Seitenansicht ermittelbar sind und dass die derart gewonnenen Erkennungsmerkmale in elektrische Erkennungssignale umgewandelt sind, die durch die Auswerteeinrichtung (9) mit hinterlegten Erkennungssignalen des jeweiligen Benutzers verglichen sind und/oder dass die Erkennungssignale in Abhängigkeit von deren Häufigkeit durch die Auswerteeinrichtung (9) ausgewertet sind.

14. Verfahren nach einem der Ansprüche 10 bis 13,
**dadurch gekennzeichnet,**
**dass** dem Objekt ein Identifzierungsmerkmal zugeordnet ist und dass das Objekt-Identifizierungsmerkmal an das Bewertungsprogramm angekoppelt ist.

15. Verfahren nach Anspruch 14,
**dadurch gekennzeichnet,**
**dass** durch den Server (8) oder den Mikroprozessor (2) ein sich ständig veränderndes Identifizierungsmerkmal generiert ist und dass durch die Auswerteeinrichtung (9) feststellbar ist, dass das dem Bewertungsprogramm angehängte Identifizierungsmerkmal des Objektes zum Zeitpunkt der Eingabe mit dem generierten Identifizierungsmerkmal übereinstimmt.
